# EUROPEAN PATENT APPLICATION

(11) **EP 1 079 136 A1**
(43) Date of publication of application: **28.02.2001**
(21) Application number: 99306833.7
(22) Date of filing: 27.08.1999
(51) Int. Cl.: F16D 65/16, B60T 11/10

(54) **Brake system having two brake lines connected to a hydraulic cylinder**

(71) Applicant: Kwang Yang Motor Co., Ltd., Sanmin Dist., Kaohsiung City (TW)
(72) Inventor: Tung, Kun-Nan, Tsoying Dist., Kaohsiung City (TW)
(74) Representative: Leale, Robin George

(57) **Abstract**

A brake system (2) includes first and second hand-operated brake lines (33, 34), a caliper (3) having hydraulic cylinder means (31) connected to the first and second brake lines (33, 34), and a brake disk (35) supported rotatably adjacent to the hydraulic cylinder means (31). The hydraulic cylinder means (31) has piston means (32) disposed movably therein. The piston means (32) has a brake pad (36) connected thereto externally of the hydraulic cylinder means (31) adjacent to the brake disk (35). The brake pad (36) is moveable to engage the brake disk (35) by action of the piston means (32) when the hydraulic cylinder means (31) is actuated. The hydraulic cylinder means (31) has a single hydraulic cylinder (31). The piston means (32) has a single piston (32) received in the hydraulic cylinder (31). The hydraulic cylinder (31) is connected fluidly to the first and second brake lines (33, 34).

## Description

This invention relates to a brake system, more particularly to a brake system having two brake lines connected to a hydraulic cylinder.

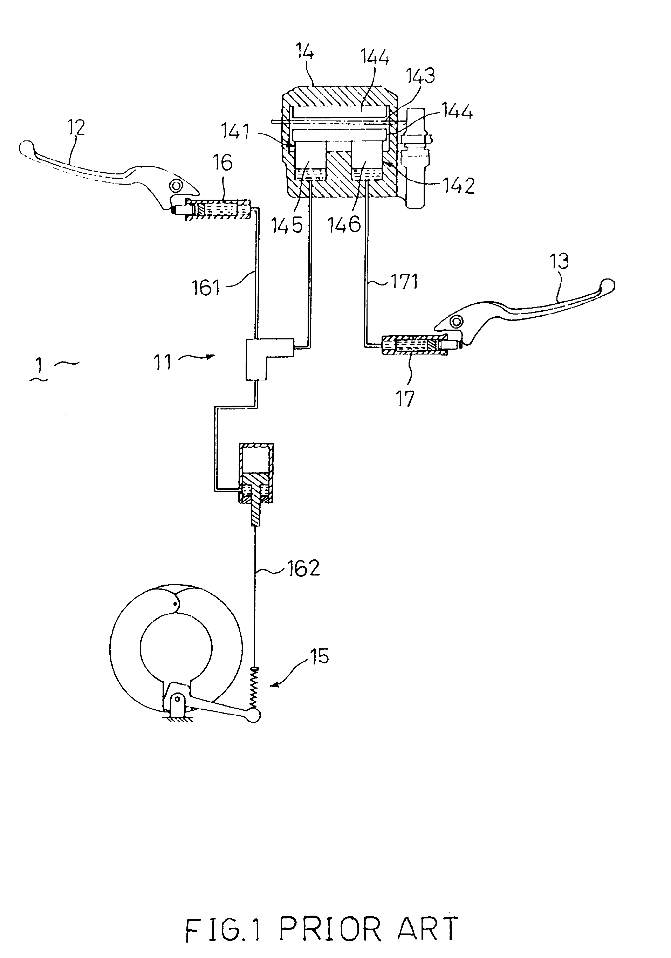

Referring to Figure 1, a conventional brake system 1 for a motorcycle is shown to comprise a brake device 11, first and second brake levers 12, 13 that are disposed respectively on left and right handles of the motorcycle and that are connected to the brake device 11, a front brake unit 14 that is connected to and operable by the brake device 11 to brake a front wheel of the motorcycle, and a rear brake unit 15 that is connected to and operable by the brake device 11 to brake a rear wheel of the motorcycle. The brake device 11 includes first and second actuating cylinders 16, 17 that are operable respectively by the first and second brake levers 12, 13 and that are filled with oil. In addition, the front brake unit 14 has two hydraulic cylinders 141, 142, a brake disk 143 disposed rotatably adjacent to the hydraulic cylinders 141, 142, and two brake pads 144 that can be controlled by the hydraulic cylinders 141, 142 to engage the brake disk 143. Two brake lines 161, 171 are connected respectively to the hydraulic cylinders 141, 142 and the first and second actuating cylinders 16, 17. Moreover, the first actuating cylinder 16 and the rear brake unit 15 have a steel cable 162 connected therebetween. As such, by pulling the first brake lever 12, the first actuating cylinder 16 can be actuated to force the oil therein into the front brake unit 14 via the brake line 161. Therefore, a piston 145 disposed in the hydraulic cylinder 141 can be moved to enable the brake pad 144 to engage the brake disk 143, thereby braking the front wheel of the motorcycle. At the same time, when the first actuating cylinder 16 is actuated, the steel cable 162 is pulled to actuate the rear brake unit 15 for braking the rear wheel of the motorcycle.

Alternatively, when the second brake lever 13 is pulled, the second actuating cylinder 17 is actuated to force the oil therein into the hydraulic cylinder 142 via the brake line 171. A piston 146 disposed in the hydraulic cylinder 142 is moved to enable the brake pad 144 to engage the brake disk 143, thereby braking the front wheel of the motorcycle.

The conventional brake system 1 suffers from the following disadvantages:
1. Two hydraulic cylinders 141, 142 are required in the brake system 1. The manufacturing cost is thus relatively high.
2. Since the pistons 145, 146 are driven individually to enable the brake pad 144 to engage the brake disk 143, the brake pad 144 is liable to wear unevenly when one brake lever is actuated more frequently than the other brake lever.

The object of the present invention is to provide a brake system that has a lower manufacturing cost than that of the aforementioned conventional brake system.

Another object of the preset invention is to provide a brake system in which the uneven wearing of the brake pad can be prevented.

According to the present invention, a brake system comprises first and second hand-operated brake lines, a caliper having hydraulic cylinder means connected to the first and second brake lines, and a brake disk supported rotatably adjacent to the hydraulic cylinder means. The hydraulic cylinder means has piston means disposed movably therein. The piston means has a brake pad connected thereto externally of the hydraulic cylinder means adjacent to the brake disk. The brake pad is moveable to engage the brake disk by action of the piston means when the hydraulic cylinder means is actuated. The hydraulic cylinder means has a single hydraulic cylinder. The piston means has a single piston received in the hydraulic cylinder. The hydraulic cylinder is connected fluidly to the first and second brake lines.

In the preferred embodiment, the hydraulic cylinder includes a closed end, an open end, a first section adjacent to the closed end, a second section that is adjacent to the open end and that is larger than the first section in diameter, and a shoulder portion formed between the first and second sections thereof. The piston has a first portion received movably in the first section, and a second portion received movably in the second section. The hydraulic cylinder further has a first fluid-receiving chamber formed in the first section between the closed end of the hydraulic cylinder and the first portion of the piston, and a second fluid-receiving chamber formed in the second section adjacent to the shoulder. The first and second fluid-receiving chambers are communicated respectively with the first and second brake lines.

Other features and advantages of the present invention will become apparent in the following detailed description of the preferred embodiment of the invention, with reference to the accompanying drawings, in which:
Figure 1 is a schematic view illustrating the construction of a conventional brake system;
Figure 2 is a schematic view of a preferred embodiment of a brake system according to the present invention;
Figure 3 is a cross sectional view of a caliper of the preferred embodiment;
Figure 4 is a schematic view illustrating how the preferred embodiment operates when a first lever is pulled; and
Figure 5 is a schematic view illustrating how the preferred embodiment operates when a second lever is pulled.

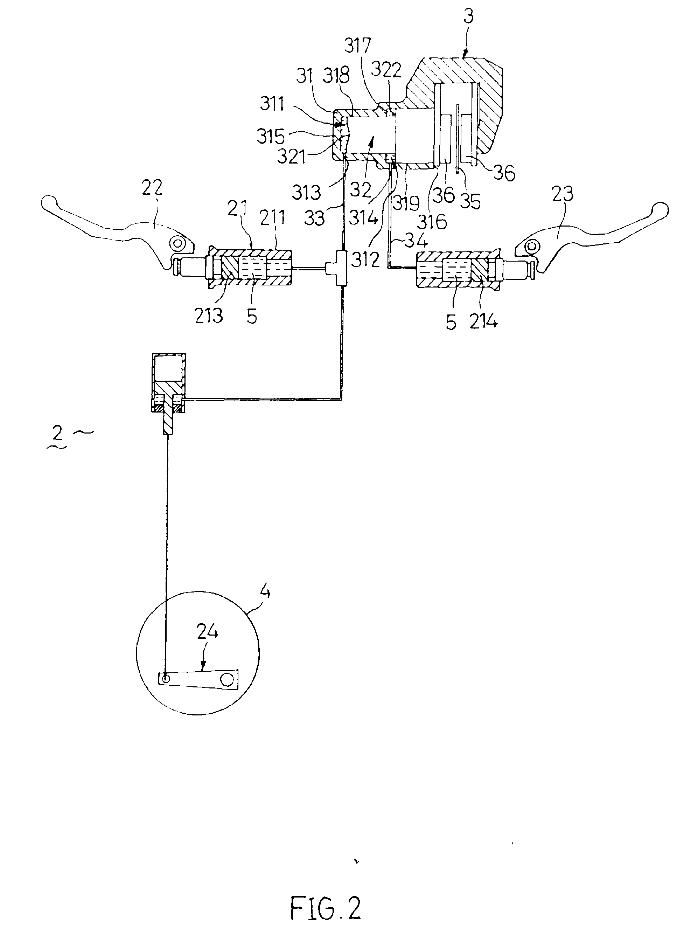

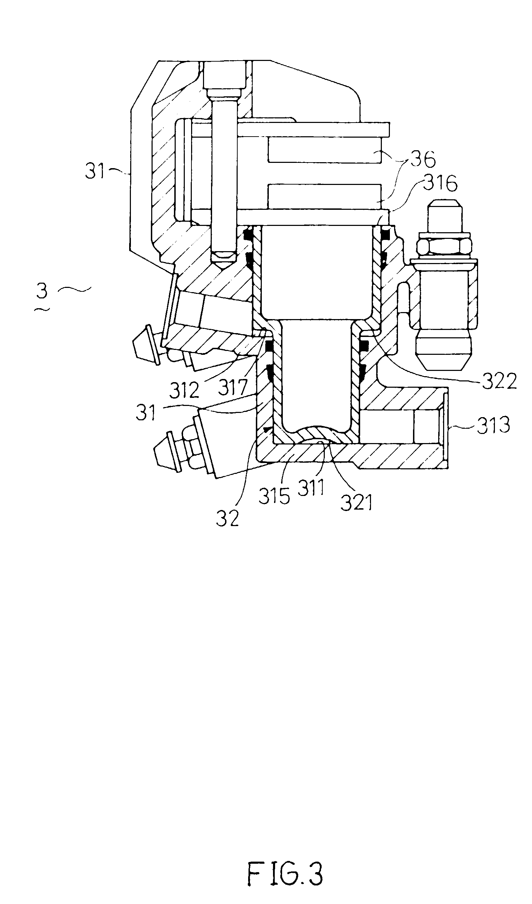

Referring to Figures 2 and 3, a preferred embodiment of a brake system 2 for a motorcycle according to the present invention is shown to comprise a brake device 21, first and second brake levers 22, 23 that are connected to the brake device 21, a caliper 3 that is connected to and operable by the brake device 21 for braking a front wheel (not shown) of the motorcycle, and a rear brake unit 24 connected to and operable by the brake device 21 for braking a rear wheel 4 of the motorcycle. First and second actuating cylinders 211, 212 are disposed between and are connected to the caliper 3 and the first and second brake levers 22, 23, respectively. The first and second actuating cylinders 211, 212 are connected to and operable by the first and second brake levers 22, 23, respectively. In addition, the first and second actuating cylinders 22, 23 have oil 5 filled therein, and first and second piston members 213, 214 disposed movably and respectively therein.

The caliper 3 has a hydraulic cylinder 31 and a piston 32 disposed movably in the hydraulic cylinder 31. The hydraulic cylinder 31 has a closed end 315, an open end 316, and an inner bore extending from the closed end 315 to the open end 316. The inner bore has a first section 318 adjacent to the closed end 315, a second section 319 that is adjacent to the open end 316 and that is larger than the first section 318 in diameter, and a shoulder portion 317 formed between the first and second sections 318, 319. The piston 32 has a first portion 321 received movably in the first section 318, and a second portion 322 received movably in the second section 319. A first fluid-receiving chamber 311 is formed in the first section 318 between the closed end 315 of the hydraulic cylinder 31 and the first portion 321 of the piston 32. A second fluid-receiving chamber 312 is formed between the second section 319 adjacent to the shoulder portion 317. The first and second fluid-receiving chambers 311, 312 are isolated from one another. The hydraulic cylinder 31 further has first and second inlet ports 313, 314 connected respectively to the first and second fluid-receiving chambers 311, 312. First and second brake lines 33, 34 are communicated respectively with the first and second fluid-receiving chambers 311, 312 through the first and second inlet ports 313, 314, and are connected respectively to the first and second actuating cylinders 211, 212. A brake disk 35 is supported rotatably adjacent to the hydraulic cylinder 31. Two brake pads 36 are provided on either sides of the brake disk 35. One of the brake pads 36 is connected to the piston 32 externally of the open end 316 of the hydraulic cylinder 31 adjacent to the brake disk 35.

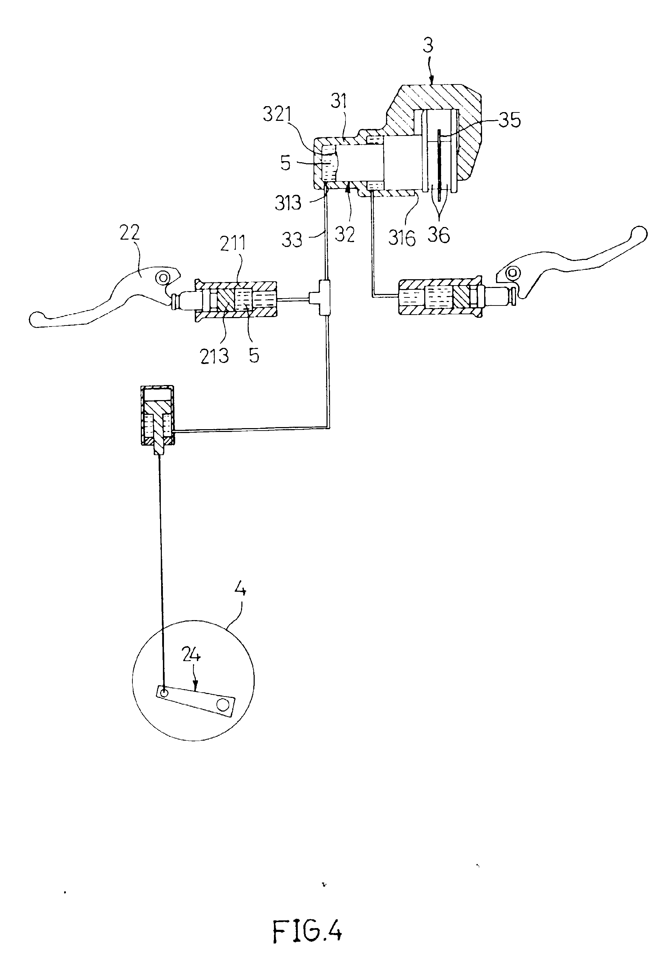

Referring to Figures 2 and 4, when the first brake lever 22 is pulled, the first piston member 213 in the first actuating cylinder 211 is moved to force the oil 5 in the same into the first fluid-receiving chamber 311 through the first brake line 33. The piston 32 is then moved toward the open end 316 of the hydraulic cylinder 31 to enable the brake pad 36 to engage the brake disk 35. As such, the front wheel of the motorcycle can be braked. At the same time, the rear brake unit 24 is actuated by the first actuating cylinder 211 to brake the rear wheel 4 of the motorcycle.

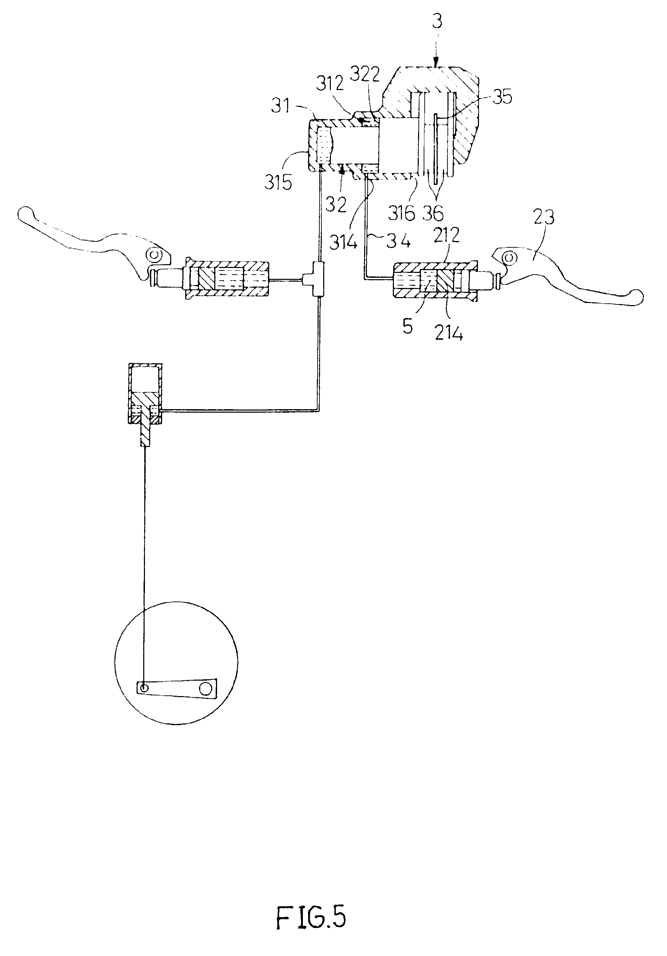

Referring to Figures 2 and 5, when the second brake lever 23 is pulled, the second piston member 214 in the second actuating cylinder 212 is moved to force the oil 5 in the same into the second fluid-receiving chamber 312 through the second brake line 34. Similarly, the piston 32 is moved toward the open end 316 of the hydraulic cylinder 31 to enable the brake pad 36 to engage the brake disk 35. As such, the front wheel of the motorcycle can also be braked.

It is appreciated that the second inlet port 314 can be not blocked or can be blocked partially by the second portion 322 of the piston 32 in order to prevent a radial impact exerted onto the second portion 322 of the piston 32 by the oil flow, which results in an offset of the axis of the piston 32 from the axis of the hydraulic cylinder 31, thereby adversely affecting the braking effect.

The advantages of the present invention are as follows:
1. Since only one hydraulic cylinder 31 and one piston 32 are employed to push the brake pad 36, the structure of the caliper 3 is simple. Therefore, the manufacturing cost of the brake system can be reduced.
2. Since the piston 32 can be moved precisely in the hydraulic cylinder 31 by pulling both or either one of the first and second brake levers 22, 23 to enable the brake pad 36 to engage evenly the brake disk 35, the uneven wearing of the brake pad 36 can be prevented.

## Claims

1. A brake system (2) comprising first and second hand-operated brake lines (33, 34), a caliper (3) having hydraulic cylinder means (31) connected to said first and second brake lines (33, 34), and a brake disk (35) supported rotatably adjacent to said hydraulic cylinder means (31), said hydraulic cylinder means (31) having piston means (32) disposed movably therein, said piston means (32) having a brake pad (36) connected thereto externally of said hydraulic cylinder means (31) adjacent to said brake disk (35), said brake pad (36) being movable to engage said brake disk (35) by action of said piston means (32) when said hydraulic cylinder means (31) is actuated, characterized by:
said hydraulic cylinder means (31) having a single hydraulic cylinder (31), said piston means (32) having a single piston (32) received in said hydraulic cylinder (31), said hydraulic cylinder (31) being connected fluidly to said first and second brake lines (33, 34).

2. The brake system (2) as claimed in Claim 1, characterized in that said hydraulic cylinder (31) includes a closed end (315), an open end (316), and an inner bore extending from said closed end (315) to said open end (316), said inner bore having a first section (318) adjacent to said closed end (315), a second section (319) that is adjacent to said open end (316) and that is larger than said first section (318) in diameter, and a shoulder portion (317) formed between said first and second sections (318, 319) thereof, said piston (32) having a first portion (321) received movably in said first section (318), and a second portion (322) received movably in said second section (319), said hydraulic cylinder (31) further having a first fluid-receiving chamber (311) formed in said first section (318) between said closed end (315) of said hydraulic cylinder (31) and said first portion (321) of said piston (32), and a second fluid-receiving chamber (312) formed in said second section (319) adjacent to said shoulder portion (317), said first and second fluid-receiving chambers (311, 312) being communicated respectively with said first and second brake lines (33, 34).
